(19) Europäisches Patentamt
European Patent Office
Office européen des brevets

(11) **EP 3 564 862 A1**

(12) **EUROPEAN PATENT APPLICATION**

(43) Date of publication:
**06.11.2019 Bulletin 2019/45**

(51) Int Cl.:
***G06N 3/04*** (2006.01)

(21) Application number: **18170554.2**

(22) Date of filing: **03.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Yang, Yinchong**
**81673 München (DE)**
• **Tresp, Volker**
**81369 München (DE)**

(54) **DETERMINING INFLUENCE OF ATTRIBUTES IN RECURRENT NEURAL NETWORKS TRAINED ON THERAPY PREDICTION**

(57)     The present invention relates to a method and system of determining influence of attributes in Recurrent Neural Networks (RNN) trained on therapy prediction. For each output neuron $z_k^l$ a relevance score $R_k^l$ is decomposed into decomposed relevance scores $R_{k \to j}^l$ for each component $x_j^l$ of an input vector $x^l$ and all decomposed relevance scores $R_{k \to j}^l$ of the present step I are combined to a relevance score $R_j^l$ for the next step I-1.

FIG 3

**Description**

The present invention relates to a method and system of determining influence of attributes in Recurrent Neural Networks (RNN) trained on therapy prediction. Specifically a method using Layer-wise Relevance Propagation (LRP) is disclosed which enables determining the specific influence of attributes of patients used as input to RNNs on the predicted or suggested therapy.

The increasing data volume and variety pose nowadays novel challenges for predictive data analysis. Especially in the task of processing data features of higher dimensionality and complexity, deep neural networks like RNNs have proven to be powerful approaches. They outperform more traditional methods that rely on hand-engineered representations of data on a wide range of problems varying from image classification over machine translation to playing video games. To a large extent, the success of deep neural networks is attributable to their capability to represent the raw data features in a new and latent space that facilitates the predictive task. Deep neural networks are also applicable in the field of healthcare informatics. Convolution neural networks (CNNs), for instance, can be applied for classification and segmentation of medical imaging data. RNNs are efficient in processing clinical events data. The predictive power of these RNNs can assist physicians in repetitive tasks such as annotating radiology images and reviewing health records. Thus, the physicians can concentrate on the more intellectually challenging and creative tasks.

However, healthcare remains a critical area where deep neural networks or machine learning models have to be applied with great caution. The fact that the internal functionality of or in other words the way results in form of suggestions are generated by (not necessarily deep) neural networks is not directly explainable limits application of (deep) neural networks in healthcare informatics. The General Data Protection Regulation (GDPR) of the European Union (EU) of May 2018 restricts automated decision making produced inter alia by algorithms. According to Article 13(2)(f) GDPR "Information to be provided where personal data are collected from the data subject" a data controller (e.g. clinics or physicians) should provide the data subject (e.g. patients) with information about "the existence of automated decision-making, including profiling, referred to in Article 22(1), (4) GDPR" and "meaningful information about the logic involved". According to Article 22(1), (2)(c) GDPR "Automated individual decision-making, including profiling" the data subject/patient "shall have the right not to be subject to a decision based solely on automated processing", unless, the data subject/patient is explicitly consent with it. Therefore, a data subject/patient has the right to demand an explanation not only of the predicted/suggested therapy, but also of the method which generates this prediction/suggestion. For clinics/physicians in the EU, the GDPR demands as a mandatory component in clinical services providing explanation where neural networks or machine learning or any other algorithmic logic is applied to generate decision prediction.

Depending on the (deep) neural network and specifically on its complexity or depth the (deep) neural network has a certain expressiveness or, in other words, power. The expressiveness of a (deep) neural network describes how many attributes e.g. of a patient can be used and how many relationships between said attributes can be recognized and considered in deriving the prediction/suggestion of a decision like a certain therapy.

For (deep) neural networks a linear and logistic regression, where normally there is a distribution assumption for regression coefficients and statistical tests to quantify whether a coefficient is significantly different from 0 are performed, cannot be used, because, there is no distribution assumption for the weight parameters (regression coefficients) of the (deep) neural network and therefore no statistical tests are applicable. One approach to describe (deep) neural networks is the Mimic Learning Paradigm (MLP) which aims to simplify the model or neural network, respectively. The MLP suggests training a simple (e.g. linear regression) model against a predicted value produced by a trained deep neural network until the simple model over-fits. MLP thus provides a simple and interpretable model. Overfitting is in general a simpler task in machine learning. However, finding a simple or shallow (linear regression) model for high dimensional and complex data is challenging. Further, due to simplification the expressiveness is possibly drastically reduced compared to the deep neural network. Hence, the predictions/suggestions made by such a simplified (deep) neural network could be falsified. Another approach for explaining (deep) neural networks, specifically RNNs and Convolutional Neural Networks (CNNs), is the Attention Mechanism (AM) which aims to still further complicate the (deep) neural network. Additional modules are included into the (deep) neural network. Said additional modules learn to assign an attention score on each time step or pixel groups. The AM provides interpretation of the relevance of the input features (e.g. attributes of a patient) and can sometimes increase prediction quality as well. One drawback is that by introducing additional modules the (deep) neural networks becomes more complex and thus require longer training time and more labelled data.

The input data features of a RNN trained on therapy prediction or suggestion, respectively, are attributes of patients. The attributes of patients can comprise inter alia personal data (age, weight, ethnicity, etc.), information about a primary tumour (type, size, location, etc.), laboratory values (coagulation markers (PT/INR), organ markers (liver enzyme count, liver function markers, kidney values, pancreatic markers (lipase, amylase), muscular markers, myocardial muscular markers, metabolism markers (bone markers (alkaline phosphatase, calcium, phosphate), fat metabolism markers (cholesterol, triglycerides, HDL cholesterol, LDL cholesterol), iron, diabetes marker (glucose)), immune defence/inflammation values (inflammation marker (CRP), immunoglobulin (IgG, IgA, IgM), proteins in serum, electrolytes)), genetic attributes or clinical image data (MRT/CT images). These attributes are provided as binary values in a high-dimensional and very spares matrix for each patient. The dimensionality of said matrix can be from tens to multiple thousands and the sparsity can be equal or higher than 90 % [percent] or preferably equal or higher than 93 %. Said input data features (patient attributes) of a RNN trained on therapy prediction are different from input data of a CNN trained on classification and segmentation of clinical image data which is provided as non-sparse or dense and low-dimensional matrix of pixels. A non-sparse/dense matrix is a matrix where most entries have a value different from 0 e.g. pixel values from 0 to 256 in a matrix of image data. This difference in the input data features of the RNN trained on therapy prediction lead to significant differences in computation. In case of image data a strong spatial correlation among neighbouring pixels can be expected. This is definitely not the case with electronic healthcare records (EHR) included in input data features of a RNN trained on therapy prediction or suggestion. For such data sequential models such as RNNs are used. The present invention consequently applies LRP on EHR data.

It is therefore an objective of the present invention to enable explaining predictions of RNNs trained on therapy prediction based on attributes of patients (patient attributes) in form of binary values in a high-dimensional and very sparse matrix. A further objective of the present invention is to preserve as much as possible of the expressiveness of architectures of RNNs, while the complexity of training (time and amount of data for training) is not significantly increased.

These objectives are achieved by the method according to claim 1 and the system according to the further independent claim. Refinements of the present invention are object of the dependent claims.

According to a first aspect of the present invention a method of determining influence of attributes in Recurrent Neural Networks (RNN) having 1 layers, where 1 is 1 to L, and time steps t, where t is 1 to T, and trained on therapy prediction, comprising the following steps starting at time step T:

> a) receiving the layers 1 of an input-to-hidden network of the RNN, an input vector $x^1$ of size M for the first layer 1=1 comprising input features for the RNN and a first relevance score $R_k^L$ of size M for each output neuron $z_k$, where k is 1 to N;

further comprising the following iterative steps for each layer 1 starting at layer L:

> b) determining for each output neuron $z_k^l$ proportions $p_{k,j}^l$ for each input vector $x^l$, where the proportions $p_{k,j}^l$ are each based on a respective component $x_j^l$ of the input vector $x^l$, a weight $w_{k,j}^l$ for the respective component $x_j^l$ and the respective output neuron $z_k^l$, wherein the weight $w_{k,j}^l$ is known from the respective layer 1;
> c) decomposing for each output neuron $z_k^l$ a relevance score $R_k^l$, wherein said relevance score $R_k^l$ is known from a relevance score $R_j^{l+1}$ of the previous step 1+1 or in step L from the first relevance score $R_k^L$, into decomposed relevance scores $R_{k \to j}^l$ for each component $x_j^l$ of the input vector $x^l$ based on the proportions $p_{k,j}^l$;
> d) combining all decomposed relevance scores $R_{k \to j}^l$ of the present step 1 to the relevance score $R_j^l$ for the next step 1-1;

and further comprising the following steps:

> e) executing steps a) to d) for the next time step t-1 of the RNN, wherein the layers 1 are the layers 1 of a hidden-to-hidden network of the RNN for the next time step t-1, the input vector $x^1$ is a last hidden state $h|_t$, which is based on the output neuron $z|_t$ of the RNN of the previous time step t, and the first relevance score $R_k^L$ is a relevance score of the previous hidden state $R_j^1|_t$ which is the last relevance score $R_j^1$ of the first layer 1=1 of the previous time step t and
> f) outputting a sequence of relevance scores $R_j^1|_t$ of the respective first layer 1=1 of all time steps t.

According to a second aspect of the present invention a system configured to determine influence of attributes in Recurrent Neural Networks, RNN, having 1 layers, where 1 is 1 to L, and time steps t, where t is 1 to T, and trained on therapy prediction, comprises at least one memory. The layers 1 are stored in the at least one memory or in different memories of the system. The system further comprises an interface configured to receive the layers 1 of an input-to-hidden network of the RNN, an input vector $x^1$ of size M for the first layer 1=1 comprising input features for the RNN and a first relevance score $R_k^L$ of size M for each output neuron $z_k$, where k is 1 to N, and configured to output a sequence of relevance scores $R_j^1|_t$ of the respective first layer 1=1 of all time steps t. The system also comprises a processing unit. The processing unit is configured to execute the following iterative steps for each layer 1 starting at layer L:

> - determining for each output neuron $z_k^l$ proportions $P_{k,j}^l$ for each input vector $x^l$, where the proportions $P_{k,j}^l$ are each based on a respective component $x_j^l$ of the input vector $x^l$, a weight $w_{k,j}^l$ for the respective component $x_j^l$ and the respective output neuron $z_k^l$, wherein the weight $w_{k,j}^l$ is known from the respective layer 1;

- decomposing for each output neuron $z_k^l$ a relevance score $R_k^l$, wherein said relevance score $R_k^l$ is known from a relevance score $R_j^{l+1}$ of the previous step $l+1$ or in step L from the first relevance score $R_k^L$, into decomposed relevance scores $R_{k \to j}^l$ for each component $x_j^l$ of the input vector $x^l$ based on the proportions $p_{k,j}^l$;
- combining all decomposed relevance scores $R_{k \to j}^l$ of the present step 1 to the relevance score $R_j^l$ for the next step 1-1.

The processing unit is further configured to execute the following step:

- executing the preceding steps for the next time step t-1 of the RNN, wherein the layers 1 are the layers 1 of a hidden-to-hidden network of the RNN for the next time step t-1, the input vector $x^1$ is a last hidden state $h|_t$, which is based on the output neuron $z|_t$ of the RNN of the previous time step t, and the first relevance score $R_k^L$ is a relevance score of the previous hidden state $R_j^1|_t$ which is the last relevance score $R_j^1$ of the first layer 1=1 of the previous time step t.

The system according to the present invention is configured to implement the method according to the present invention.

In order to explain the RNN trained on therapy prediction the RNN is left as it is. The RNN is not simplified or complicated by introduction of further modules. Instead a Layer-wise Relevance Propagation (LRP) algorithm is used on the RNN. Weight parameters $p_{k,j}$ in the RNN are analysed in order to determine how much influence each input feature/patient attribute has on the final prediction/suggestion of a therapy. In contrast to a sensitivity analysis according to AM, which calculates a partial derivative of each input feature with respect to (w.r.t.) the target, according to the present invention investigation of the p-values of regression coefficients, which test whether the regression coefficients are significantly zero, or the nodes in decision trees of the RNN is based on statements that a specific input feature/patient attribute is in general relevant for the prediction. The attention modules and the relevance propagation of AM, on the other hand, suggest how relevant each input feature is for a specific data point.

A basic idea in LRP is to decompose the predicted probability of a specific target like a suggested treatment into a set of relevance scores $R_k^l$ and redistribute them onto neurons of the previous layer of the RNN and finally onto the j input features /patient attributes $x_j$ of the first layer. The relevance scores $R_k^1$ are defined in terms of the strength of the connection between one input feature/patient attribute $x_j^1$ of the first layer 1=1 or (input) neuron $x_j^l$ of a layer 1 and one (output) neuron $z_k^l$ of the first or current layer 1, respectively, which is represented by the weight $p_{k,j}^l$ and the activation of the one (input) neuron $x_j^l$ or of the (output) neuron $z_k^{l-1}$ in the previous layer 1-1 or of the one input feature/patient attribute $x_j^1$. In each layer 1 of the RNN the relevance score $R_k^l$ can be seen as a kind of contribution that each (input) neuron $x_j^l$ or (output) neuron $z_k^{l-1}$ of the previous layer 1-1 of the RNN or input feature/patient attribute $x_j^1$ gives to each (output) neuron $z_k^l$ of the current or first layer 1 of the RNN. This approach is applied recurrently, in other words from an output layer 1=L down to the input layer 1=1 such that a relevance score $R_{k \to j}^l$ for each input feature/patient attribute $x_j^1$ is derived. This LRP is applied on real-world healthcare data in form of patient attributes which are binary values in a high-dimensional and very sparse matrix. A RNN trained to predict therapy decisions such that the prediction quality is close to that of a clinical expert. These decisions predicted/suggested by the RNN are explained using LRP. Thus it can be validated, that the derived predicted/suggested decisions regarding a therapy of a patient largely accord with the actual clinical knowledge and guidelines.

The RNN may have up to some hundred layers 1. Preferably, the maximal number of layers L is equal or larger than 20 and most preferably the maximal number of layers L is equal or higher than 30. The input vector x denotes input data features, here attributes of a patient, for the first layer of the RNN and activated output. M and N may be different for each layer 1 of the RNN. Thus for each layer 1 the specific values of M and of N have to be determined from the respective layer 1. The size of the layer 1, namely the values M and N vary a lot. The values M and N can have values between 1 and multiple thousands and preferably between tens and thousands. The first relevance score $R_k^L$ is equivalent to the predicted probability of the model. The last hidden state $h|_t$ refers to the hidden state of previous time step, namely $h|_{t-1}$ that itself depends on the pre-previous hidden state $h|_{t-2}$ and the previous input $x|_{t-1}$.

In step a) the layers 1 of the RNN are received. Further the input vector $x^1$ for the first layer 1=1 is received. The layers 1 are stored in the at least one memory of the system. The input vector $x^1$ comprises input features for the RNN like patient attributes. Also the first relevance score $R_k^L$ for the last layer 1=L is received. After receiving the input values for the method in step a) via the interface, namely the layers 1, the input vector $x^1$ and the first relevance score $R_k^L$, the consecutive steps b), c) and d) are executed for each layer 1 of the RNN in the processing unit of the system, wherein the layer L is the first layer of the iteration and the layer 1 is the last layer of the iteration. Thereby, for each layer 1 the relevance score $R_j^l$ for the next step or layer 1-1 is determined based on the relevance score $R_k^l$ of the present step/layer 1. In each step 1 of the iteration over all layers 1 firstly for each output neuron k of the present layer 1 of the RNN proportions $p_{k,j}^l$ are determined for each input vector $x^l$. Each of the proportions $p_{k,j}^l$ is based on a respective component $x_j^l$ of the input vector $x^l$. Further, each of the proportions $p_{k,j}^l$ is based on a weight $w_{k,j}^l$ for the respective component $x_j^l$, which weight $w_{k,j}^l$ is known from the respective layer 1. Finally, each of the proportions $p_{k,j}^l$ is based on the respective output neuron $z_k^l$ of the present layer 1 of the RNN.

$$p_{k,j}{}^l = \frac{x_j{}^l \cdot w_{k,j}{}^l}{z_k{}^l} = \frac{x_j{}^l \cdot w_{k,j}{}^l}{x^{l^T} \cdot w_k{}^l}$$

In the successive step c) the relevance score $R_k^l$ is decomposed for each output neuron k of the present layer 1. The relevance score $R_k^l$ for the present layer is derived from a relevance score $R_j^l$ of the previous step or layer. In the very first step L for layer L the first relevance score $R_k^L$ is given as input from step a). The relevance score $R_k^l$ is decomposed into decomposed relevance scores $R_{k \rightarrow j}{}^l$ for each component $x_j^l$ of the input vector $x^1$ based on the proportions $P_{k,j}{}^l$ from the respective preceding step b). Finally, in the successive step d) the decomposed relevance scores $R_{k \rightarrow j}$ are combined to the relevance score $R_j^l$ for the next step or layer 1-1. After the iteration of steps b) to d) has been executed over all layers L of the RNN, the steps e) and f) are executed. According to step e), which is also executed on the processing unit, the steps a) and the iteration of steps b) to d) are executed for the next time step t-1, wherein this iteration begins with time step T. For step e) the layers 1 for the iteration of steps b) to d) are he layers 1 of a hidden-to-hidden network of the RNN for the next time step t-1. Further, the input vector $x^1$ is a last hidden state $h|_t$, which is based on the output neuron $z|_t$ of the RNN of the previous time step t. Finally, the first relevance score $R_k^L$ is a relevance score of the previous hidden state $R_j^1|_t$ which is the last relevance score $R_j^l$ of the first layer 1=1 of the previous time step t. After the iteration of steps b) to d) is finished for each layer 1 of the respective hidden-to-hidden network of the RNN the sequence of relevance scores $R_j^1|_t$ of the respective first layer 1=1 of all time steps t is output via the interface.

Thus, explaining predictions of RNNs trained on therapy prediction based on attributes of patients (patient attributes) in form of binary values in a high-dimensional and very sparse matrix is enabled. Further, as much as possible of the expressiveness of architectures of RNNs is preserved, while the complexity of training (time and amount of data for training) is not significantly increased.

According to a further aspect of the present invention in step b) executed on the processing unit the respective output neuron k is determined by the input vector $x^l$ and a respective weight vector $w_k^l$.

Here, the RNN comprises fully connected layers 1. Fully connected layers have relations between all input neurons j and all output neurons k. Thereby, each input neuron $x_j^l$ influences each output neuron $z_k^l$ of the respective layer 1 of the RNN. The fully connected layers 1 can be denoted as

$$z^l = W^l \cdot x^l + b$$

In this equation $x^l$ either denotes the output neurons $z_k^{l-1}$ of a preceding layer 1-1 or the input data features for the very first layer 1=1 $x_j^1$ as input neurons of the layer 1. The matrix $W^l$ contains all weights $w_{k,j}{}^l$ for the respective layer 1. Further, $z^l$ denotes the output neurons $z_k^l$ of the respective layer 1. Further, b is a constant value, the so-called bias or intercept, and can be disregarded.

According to a further aspect of the present invention in step b) executed on the processing unit stabilizers are introduced to avoid numerical instability.

In Numerical calculations very high numbers can cause instabilities and lead to false or no data. Especially divisions through very small values can lead to said very high numbers. In order to avoid such instabilities, stabilizers of the form

$$\varepsilon \cdot \mathrm{sign}(zk)$$

can be introduced to the equation for calculation of the proportions $p_{k,j}{}^l$ for each input vector $x^l$:

$$p_{k,j}{}^l = \frac{x_j{}^l \cdot w_{k,j}{}^l + \varepsilon \cdot \mathrm{sign}(zk)/m}{x^{l^T} \cdot w_k{}^l + \varepsilon \cdot \mathrm{sign}(zk)}$$

Preferably, $\varepsilon$ can be in the range of $e^{-2}$ to $e^{-6}$.

By introducing said stabilizers false data in or abortion of the calculations for explaining predictions of RNNs trained on therapy prediction can be avoided.

According to a further aspect of the present invention the RNN is a simple RNN or a Long Short-Term Memory, LSTM, network or a Gated Recurrent Unit, GRU, network.

LSTM and GRU are all RNNs that model time sequences. LSTM and GRU are specifically suitable for memorizing long temporal patterns (from a longer time ago).

Fig. 1     shows a schematic flow chart of the method according to the present invention.

Fig. 2     shows a schematic overview of the system according to the present invention.

Fig. 3     shows a schematic depiction of the decomposing step and of the combining step.

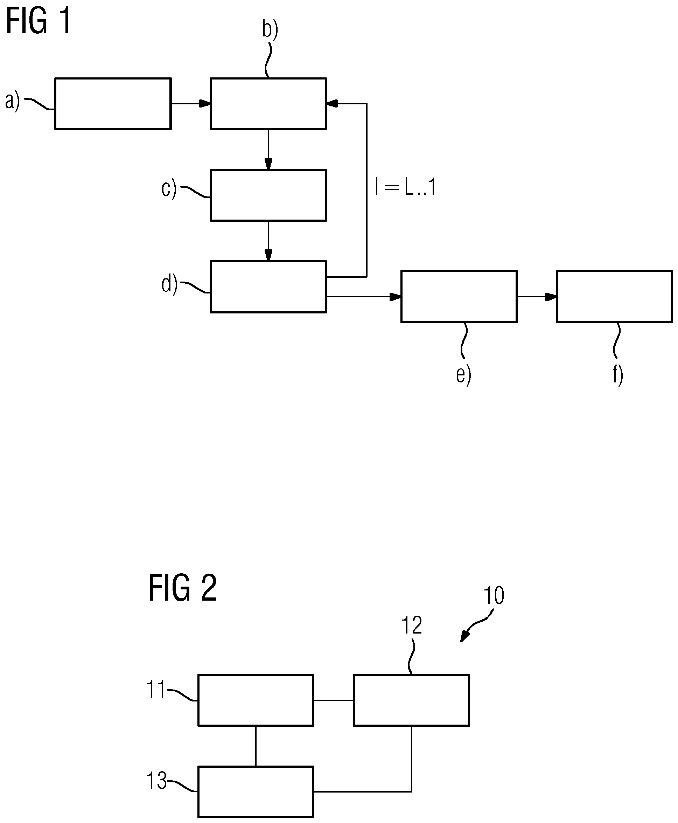

In Fig. 1 a schematic flow chart of the method according to the present invention is depicted. The method is used for determining influence of attributes in Recurrent Neural Networks (RNN) trained on therapy prediction. The RNN has 1 layers, where 1 is 1 to L, and time steps t, where t is 1 to T. The layers 1 of the RNN can be fully connected layers, where each input neuron $x_j^l$ influences each output neuron $z_k^l$ of the respective layer 1 of the RNN. The fully connected layers 1 can be denoted as

$$z^l = W^l \cdot x^l + b$$

In this equation $x^l$ either denotes the output neurons $z_k^{l-1}$ of a preceding layer 1-1 or the input data features for the very first layer 1=1 $x_j^1$ as input neurons of the layer 1. The matrix $W^l$ contains all weights $w_{k,j}^l$ for the respective layer 1. Further, $z^l$ denotes the output neurons $z_k^l$ of the respective layer 1. Further, b is a constant value, the so-called bias or intercept, and can be disregarded. In a first step a) the layers 1 of an input-to-hidden network of the RNN are received. Further, an input vector $x^1$ for the first layer 1=1 is received. The input vector $x^l$ comprises input features for the RNN like patient attributes. A first relevance score $R_k^L$ for each output neuron $z_k$, where k is 1 to N. Each relevance score $R_k^l$ for the respective layer 1 can represents a kind of contribution that each (input) neuron $x_j^{l-1}$ of the previous layer 1-1 of the RNN or input feature/patient attribute $x_j^0$ gives to each (output) neuron $z_k^l$ of the current or first layer 1 of the RNN. The following steps b), c) and d) are iteratively executed for each layer 1 = L..1 of the RNN starting with the last layer L. In step b) for each output neuron $z_k^l$ proportions $P_{k,j}^l$ for each input vector $x^l$ are determined. The proportions $P_{k,j}^l$ can be calculated as:

$$p_{k,j}{}^l = \frac{x_j{}^l \cdot w_{k,j}{}^l}{z_k{}^l} = \frac{x_j{}^l \cdot w_{k,j}{}^l}{x^{l^T} \cdot w_k{}^l}$$

The proportions $P_{k,j}^l$ are thus each based on a respective component $x_j^l$ of the input vector $x^l$, a weight $w_{k,j}^l$ for the respective component $x_j^l$ and the respective output neuron $z_k^l$. The weight $w_{k,j}^l$ is known from the respective layer 1. Additionally, stabilizers can be introduced to avoid numerical instability. In order to avoid such instabilities, stabilizers of the form

$$\varepsilon \cdot \text{sign}(zk)$$

can be introduced to the equation for calculation of the proportions $p_{k,j}^l$ for each input vector $x^l$:

$$p_{k,j}{}^l = \frac{x_j{}^l \cdot w_{k,j}{}^l + \varepsilon \cdot \text{sign}(zk)/m}{x^{l^T} \cdot w_k{}^l + \varepsilon \cdot \text{sign}(zk)}$$

Preferably, $\varepsilon$ can be in the range of $e^{-2}$ to $e^{-6}$. In step c) a relevance score $R_k^l$ is decomposed for each output neuron $z_k^l$ into decomposed relevance scores $R_{k \to j}^l$ for each component $x_j^l$. The decomposing is based on the proportions $P_{k,j}^l$ from preceding step b).

$$R_{k \to j}{}^l = p_{k,j}{}^l \cdot R_k{}^l$$

The relevance score $R_k{}^l$ is known from a relevance score $R_j{}^{l+1}$ of the previous step 1+1 or the first relevance score $R_k{}^L$ in step/layer 1=L. The relevance score $R_k{}^l$ is the sum of the decomposed relevance scores $R_{k \to j}{}^l$ over all input neurons $x_j{}^l$.

$$R_k{}^l = \sum_j R_{k \to j}{}^l$$

In step d) all decomposed relevance scores $R_{k \to j}{}^l$ of the present step or layer 1 are combined to the relevance score $R_j{}^l$ for the next step/level 1-1. The relevance score $R_j{}^l$ is the sum of the decomposed relevance scores $R_{k \to j}{}^l$ overall output neurons $z_k{}^l$.

$$R_j{}^l = \sum_k R_{k \to j}{}^l$$

After all relevance scores $R_j{}^l$ for all layers 1 = L..1 are calculated, the iteration is exited and step e) is executed. In step e) the steps a) to d) are repeated for the different time steps t = 1..T of the RNN. Thus, step e) is a further iteration over the time steps t, starting with time step T. For the steps a) to d) of the iteration of step e) the layers 1 are the layers 1 of a hidden-to-hidden network of the RNN for the next time step t-1, the input vector $x^1$ is a last hidden state $h|_t$, which is based on the output neuron $z|_t$ of the RNN of the previous time step t, and the first relevance score $R_k{}^L$ is a relevance score of the previous hidden state $R_j{}^1|_t$ which is the last relevance score $R_j{}^1$ of the first layer 1=1 of the previous time step t. After the steps a) and the steps b to d) of the iteration over the layers 1 have been executed for each time step t of the iteration of step e) the step f) is executed, wherein a sequence of relevance scores $R_j{}^1|_t$ of the respective first layer 1=1 of all time steps t is output.

The method described above can be implemented on a system 10 as schematically depicted in Fig. 2. The system 10 comprises at least one memory 11. The at least one memory 11 can be a Random Access Memory (RAM) or Read Only Memory (ROM) or any other known type of memory or a combination thereof. The layers 1 are stored in the at least one memory or in different memories of the system 10. The system 10 further comprises an interface 12. The interface 12 is configured to receive the layers 1 of an input-to-hidden network of the RNN, an input vector $x^1$ of size M for the first layer 1=1 comprising input features for the RNN and a first relevance score $R_k{}^L$ of size M for each output neuron $z_k$, where k is 1 to N, and configured to output a sequence of relevance scores $R_j{}^1|_t$ of the respective first layer 1=1 of all time steps t. The system 10 also comprises a processing unit 13. The at least one memory 11, the interface 12 and the processing unit are interconnected with each other such that they can exchange data and other information with each other. The processing unit 13 is configured to execute according to step b) determining for each output neuron $z_k{}^l$ proportions $P_{k,j}{}^l$ for each input vector $x^l$, where the proportions $P_{k,j}{}^l$ are each based on a respective component $x_j{}^l$ of the input vector $x^l$, a weight $w_{k,j}{}^l$ for the respective component $x_j{}^l$ and the respective output neuron $z_k{}^l$, wherein the weight $w_{k,j}{}^l$ is known from the respective layer 1. The processing unit is further configured to execute according to step c) decomposing for each output neuron $z_k{}^l$ a relevance score $R_k{}^l$, wherein said relevance score $R_k{}^l$ is known from a relevance score $R_j{}^{l+1}$ of the previous step 1+1 or in step L from the first relevance score $R_k{}^L$, into decomposed relevance scores $R_{k \to j}{}^l$ for each component $x_j{}^l$ of the input vector $x^1$ based on the proportions $p_{k,j}{}^l$. The processing unit is further configured to execute according to step d) combining all decomposed relevance scores $R_{k \to j}{}^l$ of the present step 1 to the relevance score $R_j{}^l$ for the next step 1-1. The processing unit 13 is also configured to execute according to step e) executing the preceding steps for the next time step t-1 of the RNN, wherein the layers 1 are the layers 1 of a hidden-to-hidden network of the RNN for the next time step t-1, the input vector $x^1$ is a last hidden state $h|_t$, which is based on the output neuron $z|_t$ of the RNN of the previous time step t, and the first relevance score $R_k{}^L$ is a relevance score of the previous hidden state $R_j{}^1|_t$ which is the last relevance score $R_j{}^1$ of the first layer 1=1 of the previous time step t.

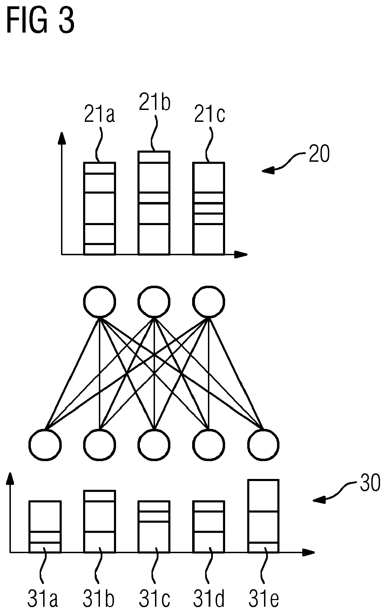

In Fig. 3 the decomposing of relevance score $R_k{}^l$ and the combining to relevance score $R_j{}^l$, are depicted. The graph of relevance scores 20 comprises exemplarily three relevance scores $R_k{}^l$ 21a-21c for each output neuron $z_k{}^l$ of the respective layer 1 and five relevance scores $R_j{}^l$ 31a-31e for each input neuron $x_j{}^l$ of the present layer 1. Each single relevance score $R_k{}^l$ 21a-21c is decomposed and re-combined to a relevance score $R_j{}^l$ 31a-31e for the input neurons $x_j{}^l$ of the present layer, which correspond to the relevance scores $R_k{}^{l-1}$ of the next step or layer 1-1.

The method and system according to the present invention were tested with data provided by the PRAEGNANT study network. The data was collected on recruited patients suffering from metastatic breast cancer. 1048 patients were selected for training of the RNN and 150 patients were selected for testing the method and system according to the present invention, all of which meet the first line of medication therapy, and have

positive hormone receptor and negative HER2. This criterion is of clinical relevance, in that only antihormone therapy or chemotherapy are possible, and even the physicians have to debate over some of these patient cases. On each patient 199 static features were retrieved that encode, 1) demographic information, 2) the primary tumour and 3) metastasis before being recruited in the study. These features form for each patient i a feature vector $m_i$, $i \in \{0, 1\}^{199}$. Further their time-stamped clinical event data were included as sequential features, such as 4) clinic visits, 5) diagnosed metastasis and 6) received therapies. For the $i^{th}$ patient these sequential features were encoded using an ordered set $\{x_i^{[t]}\}_{t=1}^{Ti}$ where each $x_i^{[t]}$ $\{0, 1\}^{189}$ $T_i$ denotes the number of clinical events observed on the patient i, i.e., the length of the sequence. Here $T_i$ is between 0 and 15, and is on average 3.03.

Among the static features, there are originally four numerical values, including the age, the number of positive cells of oestrogen receptor, the number of positive cells of progesterone receptor and the Ki-67 value. This poses a novel challenge to the application of LRP algorithm, because the consistency of the relevance propagation is only guaranteed, if all input features are in the same space. To this end, two kinds of stratification are applied to transform the numerical features. For the feature of age all patients are stratified into three groups of almost identical size, using the 33.3% and 66.7% quantiles. On the other hand it is referred to clinical practices to handle the other three features. The number of positive cells of oestrogen receptor, for instance, is stratified in two groups using one threshold of 20%. Because a percent smaller than this threshold can be a hint for chemotherapy, if a number of other criteria are fulfilled as well. The same also applies to the Ki-67 value with a threshold of 30%.

The model which is applied to predict the therapy decision consists of a LSTM with embedding layer and a feed-forward network. Due to the sparsity and dimensionality of $x_i^{[t]}$ first an embedding layer is deployed, denoted with function $\gamma(\ )$, which is expected to learn a latent representation $s_i^{[t]}$. An LSTM $\lambda(\cdot)$ then consumes these sequential latent representations as input. It generates at the last time step $T_i$ another representation vector, which is expected to encode all relevant information from the entire sequence. Recurrent neural networks, such as LSTM, are able to learn a fixed-size vector from sequences of variable sizes. From the static features $m_i$, which is also sparse and high dimensional, a representation with a feed-forward network $\eta(\cdot)$ is learned. Both representations are concatenated to a vector $h_i$, which represents all relevant information on patient I up to time step t. Finally the vector $h_i$ serves as input to a logistic regression that predicts the probability that the patient should receive either antihormone (1) or chemotherapy (0).

The training set is split into 5 mutual exclusive sets to form 5-fold cross-validation pairs. For one of the pairs hyper-parameter tuning is performed and the model on is trained on the other 4 pairs as well. The model is applied with the best validation performance in term of accuracy on the test set. The performances are listed in Tab. 1.

Tab. 1

|  | Log Loss | Accuracy | AUROC |
|---|---|---|---|
| 5-fold validation sets | $0.536 \pm 0.026$ | $0.749 \pm 0.035$ | $0.834 \pm 0.021$ |
| test set | 0.545 | 0.762 | 0.828 |

With the same schema a strong baseline model is reported, which is a two-layered feed-forward network consuming the concatenation of $m_i$, and the aggregated sequential features

$$\frac{1}{T_i} \sum_{t=1}^{T_i} x_i^{[t]}$$

The results are listed in Tab. 2.

Tab. 2

|  | Log Loss | Accuracy | AUROC |
|---|---|---|---|
| 5-fold validation sets | $0.602 \pm 0.012$ | $0.724 \pm 0.015$ | $0.798 \pm 0.011$ |
| test set | 0.589 | 0.715 | 0.806 |

Also weak baselines such as random prediction and the most-popular prediction are included in Tab. 3.

Tab. 3

|  | Log Loss | Accuracy | AUROC |
|---|---|---|---|
| Random | 1.00 | 0.477 | 0.471 |
| Most-popular | 0.702 | 0.500 | 0.500 |

The latter one constantly predicts the more popular decision in the training set for all test cases. Furthermore, a clinician was asked to evaluate 69 of the 150 test cases, in that he should decide for each patient between antihormone and chemotherapy. 75.4% of the re-evaluations turn out to agree with the ground truth, while the present model achieves 81.2% accuracy. This clinical validation is based on a relative small patient set. However, it demonstrates that a seemingly simple decision task between antihormone and chemotherapy is not always trivial even for physicians, in that a physician may not agree with her/his colleague, or even with herself/himself at another time point, in one quarter of all cases. The method according to the present invention achieves prediction performance that is comparable with human decisions. More importantly, while it is extremely expensive and demanding to for physicians to (re-)evaluate so many patient cases at once, a computer program can be utilized for the task anytime necessary.

In order to explain the prediction of the model the relevance score is calculated w.r.t. the correctly predicted class, respectively. Tab. 4 and 5 summarize the static features that are most frequently identified to have contributed to the prediction of antihormone and chemotherapy, respectively, in the test set.

Tab. 4

| Features | Frequencies |
|---|---|
| no neoadjuvant therapy as (part of) first treatment | 41 |
| positive estrogen receptor status | 39 |
| no anti-HER2 as (part of) first treatment | 37 |
| positive progesterone receptor status | 31 |
| positive cells of estrogen receptor $\geq$ 20% | 28 |
| Ki-67 value not identified | 22 |
| no chemotherapy as (part of) first treatment | 21 |
| age group: old | 20 |
| overall evaluation: cT2 | 17 |
| estrogen immunreactive score: 12 (positive) | 17 |
| no antihormone therapy as (part of) first treatment | 12 |
| adjuvant antihormone therapy as (part of) first treatment | 10 |
| progesterone receptor status positive cells unknown | 10 |
| metastasis grading cM0 | 9 |
| never hormone replacement therapy | 9 |
| progesterone immunreactive score: 12 (positive) | 7 |
| estrogen receptor status positive cells unknown | 6 |
| overall evaluation: cT4 | 6 |

Recalling that the patients are known to have positive hormone receptors, antihormone therapy seems to be the default decision. This fact is supported, for instance, by the features of "positive oestrogen receptor status" (2nd) and "positive cells of oestrogen receptor $\geq$ 20%" (5th) in Tab. 4. The 8th feature, the age group, suggests that the eldest patients should receive antihormone therapy.

This also agrees with clinical knowledge that chemotherapy often results in severe side-effect should be prescribed with caution to elder patients. However, it is much more interesting to study what the features that result in a chemotherapy decision are, because an antihormone therapy seems to be the default decision for such patient cohort.

Tab. 5

| Features | Frequencies |
|---|---|
| primary tumor malignant invasive | 37 |
| age group: young | 23 |
| metastasis in lungs | 23 |
| metastasis in liver | 23 |
| metastasis in lymph nodes | 18 |
| surgery for primary tumor | 18 |
| G3 grading | 17 |
| neoadjuvant chemotherapy as (part of) first treatment | 15 |
| only neoadjuvant chemotherapy as (part of) first treatment | 14 |
| no radiotherapy as (part of) first treatment | 13 |
| Ki-67 value IHC $\geq$ 30% | 12 |
| no surgery for primary tumor | 11 |
| no antihormone therapy as (part of) first treatment | 10 |
| chemotherapy as (part of) first treatment | 10 |
| positive cells of progesterone receptor > 20% | 8 |
| Ki-67 value IHC $\leq$ 30% | 7 |
| meastasis staging cMl | 7 |
| postmenopausal | 6 |

In Tab. 5, features such as "primary tumour malignant invasive" (1st), "Ki-67 value IHC $\geq$ 30%" (11th), that describe an invasive primary tumour that suggests chemotherapy are found. Features like "G3 grading" (7th) and the metastasis in lungs, liver and lymph nodes (3rd, 4th and 5th) depict a late stage of the metastasis. The patient features of "age group: young" and "postmenopausal" are also identified to have contributed to the prediction. All these factors agree with the clinical knowledge, as well as guidelines in handling metastatic breast cancer with chemotherapy.

Tab. 6 and Tab. 7 list the sequential features that are frequently marked as relevant for the respective prediction. The event feature that belongs to an type is denoted using a colon. For instance, "medication therapy: antihormone therapy" means a medication therapy that has a feature of antihormone type.

In Tab. 6 the features "curative radiotherapy" (1st) and surgeries (2d, 4th and 5th) indicate an early stage of the cancer. Because the physicians have undergone therapies that aim at curing the primary tumour. The features of "no metastasis in liver" (7th) and "first lesion metastasis in lungs" (8th) suggest an early phase in the development of the metastasis, which also indicates an optimistic therapy situation.

Tab. 6

| Features | Frequencies |
|---|---|
| radiotherapy: curative | 25 |
| surgery: Excision | 25 |
| visit: ECOG status: alive | 13 |
| surgery: Mastectomy | 11 |
| surgery: breast preservation | 9 |
| radiotherapy: percutaneous | 6 |
| metastasis: none in liver | 3 |

(continued)

| Features | Frequencies |
| --- | --- |
| metastasis: first lesions of unclear dignity in lungs | 2 |
| medication therapy: ended due to toxic effects | 2 |
| medication therapy: regularly ended | 2 |

In Tab. 7, however, features are observed that support a decision for chemotherapy. Specifically, "a complete remission of metastasis" (2nd) and "local recurrence in the breast" (3rd) are hints of a progressing cancer which, considering other patient features in Tab. 5, would lead to a decision for chemotherapy.

Tab. 7

| Features | Frequencies |
| --- | --- |
| medication therapy: type of following a surgery | 15 |
| metastasis: type of complete remission | 12 |
| local recurrence: in the breast | 11 |
| medication therapy: no surgery before or after | 7 |
| medication therapy: antihormone therapy | 5 |
| tumor board: first line met | 4 |
| medication therapy: for cM0/local recurrence | 4 |
| local recurrence: invasive recurrence | 2 |
| medication therapy: bone specific therapy | 2 |

In Tab. 8 for each event type, such as local recurrence, radiotherapy, etc., all relevance scores for antihormone and chemotherapy, respectively are summarized.

Tab. 8

| event type | antihormone therapy | chemotherapy |
| --- | --- | --- |
| local recurrence | -0.193 | 0.772 |
| radiotherapy | 1.064 | -0.398 |
| medication therapy | 2.023 | -1.137 |
| metastasis | -1.192 | 3.657 |
| surgery | 0.697 | -0.883 |
| visit | -0.058 | 0. 676 |

The first row in the Tab. 8, for instance, can be interpreted such that, if the patients have experienced a local recurrence, she/he should receive chemotherapy instead of an antihormone therapy (0.772 vs. -.193). Another dominating decision criterion is given by the metastasis (4th row): according to the LRP algorithm, the fact that metastasis is observed in the past also strongly suggests chemotherapy instead of an antihormone therapy (3.657 vs. -1.192), which again agrees with clinical guidelines. It is, however, not always appropriate to interpret each feature independently. A clinical therapy decision might be an extremely complicated one. The interactions between the features could result in a decision that is totally different from the one that only takes into account a single feature.

A patient case A, confer Tab. 9, received an antihormone therapy, which the model correctly predicts with a probability of 0.754.

Tab. 9: Patient case A

| | relevance score |
|---|---|
| static features | |
| ever hormone replacement therapy | -0.131 |
| postmenopausal | -0.057 |
| two pregnancies | -0.030 |
| 3rd age group | 0.160 |
| bone metastasis before study | 0.728 |
| | |
| sequential features | |
| surgery: breast preservation | 0.010 |
| medication: antihormone therapy | 0.011 |
| medication: first treatment | 0.018 |
| medication: regularly ended | 0.033 |
| radiotherapy: percutaneous | 0.036 |
| radiotherapy: adjuvant | 0.050 |
| surgery: excision | 0.061 |
| radiotherapy: curative | 0.061 |

One observes 4 events before this decision was due. The LRP algorithm assigns high relevance scores to the fact that she had a bone metastasis before being recruited in the study. Bone metastasis is seen as an optimistic metastasis, because there exist a variety of bone specific medications that effectively treat this kind of metastasis. Also the event of curative radiotherapy, which is assigned with a high relevance score, hints a good outcome of the therapy. Considering the patient is in the 3rd age group as well, it is often recommended in such cases to prescribe antihormone therapy. For this specific patient, the LRP algorithm turns out to have identified relevant features that accord with clinical guidelines.

A patient B, see Tab. 10, was prescribed chemotherapy, which the model predicted with a probability of 0.916.

Tab. 10: Patient case B

| | relevance score |
|---|---|
| static features | |
| postmenopausal | 0.024 |
| other metastasis before study | 0.139 |
| 1st age group | 0.184 |
| metastasis in brain before study | 0.276 |
| metastasis in lungs before study | 0.286 |
| | |
| sequential features | |
| medication: antihormone | 0.005 |
| Radiotherapy: palliative | 0.005 |
| medication: not related to a surgery | 0.006 |
| medication: treatment of a local recurrence | 0.008 |
| local recurrence: in axilla | 0.017 |

(continued)

|  | relevance score |
|---|---|
| local recurrence: invasive | 0.046 |
| local recurrence: in the breast | 0.048 |

Seven events have been observed before this therapy decision was due. The static features that have been identified as relevant for the chemotherapy show a strong pattern of metastasis, including brain, lung and other locations. The identified sequential features include invasive local recurrences in the breast and axilla. Based on general clinical knowledge and guideline, for such a young patient with quite malignant tumour, chemotherapy seems indeed appropriate. Furthermore, it is also interesting to see that the feature of being postmenopausal has a negative relevance for the decision antihormone therapy in case A, while a positive one for the chemotherapy in case B. In other words, being postmenopausal always supports the decision of chemotherapy, which agrees with clinical knowledge and guidelines.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

**Claims**

1. A method of determining influence of attributes in Recurrent Neural Networks, RNN, having 1 layers, where 1 is 1 to L, and time steps t, where t is 1 to T, and trained on therapy prediction, comprising the following steps starting at time step T:

   a) receiving the layers 1 of an input-to-hidden network of the RNN, an input vector $x^1$ of size M for the first layer 1=1 comprising input features for the RNN and a first relevance score $R_k^L$ of size M for each output neuron $z_k$, where k is 1 to N;

   further comprising the following iterative steps for each layer 1 starting at layer L:

   b) determining for each output neuron $z_k^l$ proportions $p_{k,j}^l$ for each input vector $x^l$, where the proportions $p_{k,j}^l$ are each based on a respective component $x_j^l$ of the input vector $x^l$, a weight $w_{k,j}^l$ for the respective component $x_j^l$ and the respective output neuron $z_k^l$, wherein the weight $w_{k,j}^l$ is known from the respective layer 1;

   c) decomposing for each output neuron $z_k^l$ a relevance score $R_k^l$, wherein said relevance score $R_k^l$ is known from a relevance score $R_j^{l+1}$ of the previous step 1+1 or in step L from the first relevance score $R_k^L$, into

13

decomposed relevance scores $R_{k \to j}^l$ for each component $x_j^l$ of the input vector $x^l$ based on the proportions $p_{k,j}^l$;
d) combining all decomposed relevance scores $R_{k \to j}^l$ of the present step 1 to the relevance score $R_j^l$ for the next step 1-1;

and further comprising the following steps:

e) executing steps a) to d) for the next time step t-1 of the RNN, wherein the layers 1 are the layers 1 of a hidden-to-hidden network of the RNN for the next time step t-1, the input vector $x^1$ is a last hidden state $h|_t$, which is based on the output neuron $z|_t$ of the RNN of the previous time step t, and the first relevance score $R_k^L$ is a relevance score of the previous hidden state $R_j^1|_t$ which is the last relevance score $R_j^l$ of the first layer 1=1 of the previous time step t and

f) outputting a sequence of relevance scores $R_j^1|_t$ of the respective first layer 1=1 of all time steps t.

2. The method according to claim 1, wherein in step b) the respective output neuron k is determined by the input vector $x^l$ and a respective weight vector $w_k^l$.

3. The method according to claim 1 or 2, wherein in step b) stabilizers are introduced to avoid numerical instability.

4. The method according to any of the preceding claims 1 to 3, wherein the RNN is a simple RNN or a Long Short-Term Memory, LSTM, network or a Gated Recurrent Unit, GRU, network.

5. A system (10) configured to determine influence of attributes in Recurrent Neural Networks, RNN, having 1 layers, where 1 is 1 to L, and time steps t, where t is 1 to T, and trained on therapy prediction, said system (10) comprising:

- at least one memory (11), wherein the layers 1 are stored in the at least one memory (11) or in different memories of the system (10);
- an interface (12) configured to receive the layers 1 of an input-to-hidden network of the RNN, an input vector $x^1$ of size M for the first layer 1=1 comprising input features for the RNN and a first relevance score $R_k^L$ of size M for each output neuron $z_k$, where k is 1 to N, and configured to output a sequence of relevance scores $R_j^1|_t$ of the respective first layer 1=1 of all time steps t; and
a processing unit (13) configured to execute the following iterative steps for each layer 1 starting at layer L:

- determining for each output neuron $z_k^l$ proportions $p_{k,j}^l$ for each input vector $x^l$, where the proportions $p_{k,j}^l$ are each based on a respective component $x_j^l$ of the input vector $x^l$, a weight $w_{k,j}^l$ for the respective component $x_j^l$ and the respective output neuron $z_k^l$, wherein the weight $w_{k,j}^l$ is known from the respective layer 1;
- decomposing for each output neuron $z_k^l$ a relevance score $R_k^l$, wherein said relevance score $R_k^l$ is known from a relevance score $R_j^{l+1}$ of the previous step 1+1 or in step L from the first relevance score $R_k^L$, into decomposed relevance scores $R_{k \to j}^l$ for each component $x_j^l$ of the input vector $x^1$ based on the proportions $P_{k,j}^l$;
- combining all decomposed relevance scores $R_{k \to j}^l$ of the present step 1 to the relevance score $R_j^l$ for the next step 1-1;

and further to execute the following step:

- executing the preceding steps for the next time step t-1 of the RNN, wherein the layers 1 are the layers 1 of a hidden-to-hidden network of the RNN for the next time step t-1, the input vector $x^1$ is a last hidden state $h|_t$, which is based on the output neuron $z|_t$ of the RNN of the previous time step t, and the first relevance score $R_k^L$ is a relevance score of the previous hidden state $R_j^1|_t$ which is the last relevance score $R_j^1$ of the first layer 1=1 of the previous time step t.

6. The system (10) according to claim 5, wherein the system (10) is configured to execute the method according to any of the claims 1 to 4.

FIG 1

a) ──┐ ┌──────┐        b) ╮
      │ │      │ ──────►┌──────────┐◄───────────┐
      └─┤      │        │          │            │
        └──────┘        └────┬─────┘            │
                             │                  │
                             ▼                  │  I = L..1
        c) ──┐          ┌──────────┐            │
             │          │          │            │
             └──────────┤          │            │
                        └────┬─────┘            │
                             │                  │
                             ▼                  │
        d) ──┐          ┌──────────┐            │
             │          │          │────────────┘
             └──────────┤          │────────►┌──────────┐────►┌──────────┐
                        └──────────┘         │          │     │          │
                                             └────┬─────┘     └────┬─────┘
                                                  e)               f)

FIG 2

                                                        10
                                      12 ╮          ╱
                                        │         ╱
        11 ──┐  ┌──────────┐  ┌──────────┐
             │  │          │  │          │
             └──┤          ├──┤          │
                └────┬─────┘  └────┬─────┘
                     │             │
        13 ──┐  ┌─────┴────┐       │
             │  │          │       │
             └──┤          ├───────┘
                └──────────┘

FIG 3

Europäisches
Patentamt

European
Patent Office

Office européen
des brevets

# EUROPEAN SEARCH REPORT

Application Number

EP 18 17 0554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEILA ARRAS ET AL: "Explaining Recurrent Neural Network Predictions in Sentiment Analysis", PROCEEDINGS OF THE 8TH WORKSHOP ON COMPUTATIONAL APPROACHES TO SUBJECTIVITY, SENTIMENT AND SOCIAL MEDIA ANALYSIS, 7 September 2017 (2017-09-07), pages 159-168, XP055512429, Stroudsburg, PA, USA DOI: 10.18653/v1/W17-5221 * abstract * * page 160, left-hand column, line 44 - page 162, left-hand column, line 14 * | 1-6 | INV. G06N3/04 |
| A | JIWEI LI ET AL: "Visualizing and Understanding Neural Models in NLP", PROCEEDINGS OF THE 2016 CONFERENCE OF THE NORTH AMERICAN CHAPTER OF THE ASSOCIATION FOR COMPUTATIONAL LINGUISTICS: HUMAN LANGUAGE TECHNOLOGIES, 12 June 2017 (2017-06-12), pages 681-691, XP055512555, Stroudsburg, PA, USA DOI: 10.18653/v1/N16-1082 * abstract; figure 3 * * page 681, left-hand column, line 1 - page 682, left-hand column, line 2 * * page 682, right-hand column, line 32 - page 688, left-hand column, line 7 * | 1-6 | TECHNICAL FIELDS SEARCHED (IPC) G06N |

-/--

The present search report has been drawn up for all claims

| Place of search | Date of completion of the search | Examiner |
|---|---|---|
| The Hague | 17 October 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 17 0554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Alexander Binder ET AL: "Layer-Wise Relevance Propagation for Deep Neural Network Architectures" In: "Frontier and Innovation in Future Computing and Communications", 1 January 2016 (2016-01-01), Springer Netherlands, Dordrecht, XP055512437, ISSN: 1876-1100 ISBN: 978-94-017-8798-7 vol. 376, pages 913-922, DOI: 10.1007/978-981-10-0557-2_87, * abstract; figure 1 * * page 2, line 6 - page 3, last line * | 1-6 | |
| A | Wojciech Samek ET AL: "Explainable Artificial Intelligence: Understanding, Visualizing and Interpreting Deep Learning Models", , 28 August 2017 (2017-08-28), XP055512441, Retrieved from the Internet: URL:https://arxiv.org/pdf/1708.08296.pdf [retrieved on 2018-10-16] * abstract; figures 1,2 * * section 3 * | 1-6 | TECHNICAL FIELDS SEARCHED (IPC) |

-/--

The present search report has been drawn up for all claims

| Place of search | Date of completion of the search | Examiner |
|---|---|---|
| The Hague | 17 October 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 17 0554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEBASTIAN BACH ET AL: "On Pixel-Wise Explanations for Non-Linear Classifier Decisions by Layer-Wise Relevance Propagation", PLOS ONE, vol. 10, no. 7, 10 July 2015 (2015-07-10), pages 1-46, XP055228791, US ISSN: 1932-6203, DOI: 10.1371/journal.pone.0130140 * abstract; figure 1 * * page 1, line 1 - page 9, last line * * page 11, line 7 - page 22, last line * ----- | 1-6 | |
| A | MONTAVON GRÉGOIRE ET AL: "Explaining nonlinear classification decisions with deep Taylor decomposition", PATTERN RECOGNITION, ELSEVIER, GB, vol. 65, 30 November 2016 (2016-11-30), pages 211-222, XP029900423, ISSN: 0031-3203, DOI: 10.1016/J.PATCOG.2016.11.008 * abstract; figures 1,2,4 * * page 211, left-hand column, line 1 - page 218, left-hand column, line 15 * ----- | 1-6 | TECHNICAL FIELDS SEARCHED (IPC) |
| A | US 2018/018553 A1 (BACH SEBASTIAN [DE] ET AL) 18 January 2018 (2018-01-18) * abstract; figures 1A-2D * * paragraph [0012] - paragraph [0018] * * paragraph [0086] - paragraph [0106] * * paragraph [0237] * ----- | 1-6 | |
| A | US 2017/372475 A1 (GULSUN MEHMET A [US] ET AL) 28 December 2017 (2017-12-28) * paragraph [0004] - paragraph [0005] * * paragraph [0018] - paragraph [0026] * ----- | 1-6 | |

The present search report has been drawn up for all claims

| Place of search | Date of completion of the search | Examiner |
|---|---|---|
| The Hague | 17 October 2018 | Totir, Felix |

## ANNEX TO THE EUROPEAN SEARCH REPORT
## ON EUROPEAN PATENT APPLICATION NO.

EP 18 17 0554

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2018

| Patent document cited in search report | | | Publication date | Patent family member(s) | | | Publication date |
|---|---|---|---|---|---|---|---|
| US 2018018553 | A1 | | 18-01-2018 | BR | 112017019821 | A2 | 15-05-2018 |
| | | | | CA | 2979579 | A1 | 29-09-2016 |
| | | | | CN | 107636693 | A | 26-01-2018 |
| | | | | EP | 3271863 | A1 | 24-01-2018 |
| | | | | JP | 2018513507 | A | 24-05-2018 |
| | | | | KR | 20170134508 | A | 06-12-2017 |
| | | | | US | 2018018553 | A1 | 18-01-2018 |
| | | | | WO | 2016150472 | A1 | 29-09-2016 |
| US 2017372475 | A1 | | 28-12-2017 | CN | 107545269 | A | 05-01-2018 |
| | | | | EP | 3261024 | A2 | 27-12-2017 |
| | | | | US | 9767557 | B1 | 19-09-2017 |
| | | | | US | 2017372475 | A1 | 28-12-2017 |

EPO FORM P0459

For more details about this annex : see Official Journal of the European Patent Office, No. 12/82